Europäisches Patentamt

European Patent Office

Office européen des brevets

(19)

(11) **EP 1 441 894 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(51) Int Cl.:
**B29C 47/68** (2006.01)   **B29C 47/92** (2006.01)

(21) Anmeldenummer: **02782920.9**

(22) Anmeldetag: **15.10.2002**

(86) Internationale Anmeldenummer:
**PCT/EP2002/011545**

(87) Internationale Veröffentlichungsnummer:
**WO 2003/033239 (24.04.2003 Gazette 2003/17)**

(54) **VORRICHTUNG ZUR PRÜFUNG DER REINHEIT VON KUNSTSTOFFSCHMELZEN**

METHOD FOR TESTING THE PURITY OF PLASTIC MELTS

DISPOSITIF DE CONTROLE DE LA PURETE DE BAINS DE MATIERE PLASTIQUE EN FUSION

(84) Benannte Vertragsstaaten:
**AT BE BG CH CY CZ DE DK EE ES FI FR GB GR IE IT LI LU MC NL PT SE SK TR**

(30) Priorität: **15.10.2001 DE 10150796**

(43) Veröffentlichungstag der Anmeldung:
**04.08.2004 Patentblatt 2004/32**

(73) Patentinhaber: **Dr. Collin GmbH**
**85560 Ebersberg (DE)**

(72) Erfinder: **COLLIN, Heinrich**
**85591 Vaterstetten (DE)**

(74) Vertreter: **Fleuchaus, Andrea**
**Fleuchaus & Gallo,**
**Patentanwälte,**
**Melchiorstrasse 42**
**81479 München (DE)**

(56) Entgegenhaltungen:
**US-A- 5 880 193**      **US-A- 6 019 916**
**US-B1- 6 196 267**

- **LEISTRITZ EXTRUDER CO: "Test Color Dispersion with Backpressure" PLASTICSTECHNOLOGY, [Online] September 2001 (2001-09), XP002228839 Gefunden im Internet: <URL:http: //www.plasticstechnology.com/Scr ipts/ SP-MainPT.asp?file=d:\plasticstechnol ogy.com\wwwroot\articles\kuw\compnd\com054 .html&qt=test color dispersion> [gefunden am 2003-01-23]**
- **PATENT ABSTRACTS OF JAPAN vol. 1996, no. 10, 31. Oktober 1996 (1996-10-31) & JP 08 156072 A (TANAKA KAZUYUKI), 18. Juni 1996 (1996-06-18)**

EP 1 441 894 B1

**Beschreibung**

Vorrichtung zum Prüfen der.Reinheit einer Kunststoffschmelze durch Plastifizieren der Schmelze z. B. in einem Extruder und durch Hindurchpressen einer definierten Menge dieser Schmelze durch ein Sieb definierter Größe und Maschenweite bei gleichzeitiger Messung des Schmelzedruckes, welcher sich vor dem Sieb aufbaut, in der Literatur auch als Druckfiltertest bezeichnet.

Eine Vorrichtung dieser Art ist durch die DE-A-19855058 bekannt.

Der Druckfiltertest ist eine standardisierte Prüfmethode zur Quantifizierung der Qualität von thermoplastischen Rohstoffen, vor allem aber Compounds. Der Gehalt an Agglomeraten, sonstiger nicht aufgeschmolzener Partikel und nicht ausreichend dispergierter Füllstoffen, z. B. Pigmente, werden in einem Sieb zurückgehalten. Es wird eine definierte Menge einer Schmelze unter Verwendung eines Siebes definierter Fläche und Feinheit extrudiert.

Durch das fortlaufende Zusetzen des Siebes mit Partikeln steigt der Massedruck vor dem Sieb. Der mit einem Membrandruckaufnehmer vor dem Sieb gemessene Druck, bzw. Druckanstieg ist ein Maß für die Qualität der Schmelze bzw. für die Feinheit des Füllstoffes, z. B. Pigmentes, und damit der Güte des Compounds bzw. Masterbatches.

Die Qualität des Produkts wird charakterisiert durch den Druckfilterwert DF. Dieser wird heute noch unterschiedlich berechnet, bildet sich aber im wesentlichen aus dem Quotienten der Druckdifferenz (Enddruck minus Anfangsdruck) geteilt durch das während der Prüfzeit extrudierte Gewicht der Schmelze.

$$DF(t) = \frac{P_1 - P_2}{W}$$

In der Praxis wird heute das zu prüfende Kunststoffgranulat in einem Einschneckenextruder aufgeheizt und unter Druck und Temperatur dem danach angeordneten Sieb zurückgeführt.

Hierbei gibt es zwei grundsätzliche Methoden der Bestimmung einer bestimmten Menge an Schmelze, welche durch das Sieb gepreßt wird:

(a) in einer einfachen Version wird eine definierte Menge entweder abgewogen und komplett durch den Extruder und nachfolgendes Sieb gefahren oder das aus dem Sieb austretende Material wird auf einer Waage aufgefangen und gewogen.

(b) in einer oft angewendeten Version wird die Schmelze vom Einschneckenextruder in eine Zahnradpumpe gefördert. Diese Zahnradpumpe wird mit genau definierter Drehzahl angetrieben und fördert - da nahezu kein Schlupf auftritt - unabhängig vom Gegendruck eine definierte Menge an Schmelze durch das nachfolgende Sieb.

Der im Folgenden als Sieb bezeichnete wesentliche Bauteil eines solchen Prüfgerätes besteht aus einer massiven Lochscheibe aus Stahl, welche die Druckkräfte aus dem sich bei zunehmend verschließenden Sieb steigenden Kräfte aufnimmt und den darauf liegenden mehrlagigen Siebronden, welche den eigentlichen Siebvorgang bewirken. Diese Siebronden können durch eine außen umgebördelte Einfassung zusammengehalten werden. Das Sieb muß druckdicht eingespannt sein, so daß Schmelze nicht seitlich entweichen kann. Für jeden Test muß ein neues Sieb verwendet werden. Es muß aber zu einem Wechsel des Siebes

- der Schmelzdruck abgebaut werden,
- der Extruder und gegebenenfalls auch die Schmelzepumpe abgestellt werden,
- die Einspannvorrichtung des Siebes geöffnet werden,
- das benutzte Sieb aus dem heißen Gerät entnommen werden,
- die Auflagefläche gesäubert werden,
- eine neue Lochplatte mit eingelegter Siebronde eingelegt werden,
- die Einspannvorrichtung, z. B. eine C-förmige Spange, eingelegt und geschlossen werden,
- es muß mehrere Minuten gewartet werden, bis die Lochplatte mit Sieb sich auf genaue Gerätetemperatur erwärmt hat,
- dann kann der Extruder und gegebenenfalls die Pumpe eingeschaltet werden, der nächste Test kann beginnen.

Dieser am häufigsten ausgeführte Ablauf ist enorm zeit- und arbeitsaufwendig und gefährdet die Sicherheit des Bedieners, da dieser ständig mit sehr heißen Teilen hantieren muß.

Zusätzliche Verzögerungen bringt das Abstellen und nach dem Wechsel wieder Anstellen des Antriebes und das Abwarten der stabilen Regelposition.

Eine weitere Erschwernis bringt die Tatsache mit sich, daß der Schmelzestrom meist horizontal fließt, die Lochplatte mit Sieb also in senkrechter Position (die Scheibe hochstehend) eingebaut werden muß. Es besteht daher dauernd die Gefahr, daß eingelegte Siebronden und zusätzliche Dichtringe beim Einlegen herunterfallen.

In einer Variante werden handelsübliche Siebwechsler eingesetzt. Dieses sind in der Regel Geräte, bei welchen zwei Siebe in einer Schwenkplatte eingelegt sind, es erfolgt ein Hin- und Herschwenken. Je ein Sieb ist in Arbeitsposition, das zweite Sieb kann in der offenen Position entnommen oder eingelegt werden. Dieses System erspart das Öffnen eines Flansches und das händische Entnehmen des Siebes. Es bleibt aber das Problem, daß sicher nur in drucklosem Zustand der Siebwechsel erfolgen kann. Es bleibt also das Abstellen des Antriebes, das Warten bis der Druck abgebaut ist, nach dem Schwenken des Siebwechslers das Warten bis die Lochplatte mit Sieb auf Temperatur ist, dann der Start des Extruders etc. Zusätzlich problematisch ist das Problem des Abdichtens. Dieses erfolgt bei den Standardsiebwechslern durch ein selbstdichtendes Element. Dies ist aber bei weiten Bereichen der Viskosität, wie sie bei den DFT-Prüfungen gebräuchlich sind, nicht dicht.

Es gibt auch Siebwechsler, welche quasi kontinuierlich von einer Position in die nächste drehen. Diese Systeme werden in Produktionsmaschinen eingesetzt und sind so groß und teuer, daß sie für diese Aufgabe nicht genutzt werden.

Die Geräte nach dem Stand der Technik haben also folgende Nachteile:

- Das Auswechseln eines Siebes, um einen neuen Prüfvorgang beginnen zu können, erfordert einen erheblichen Zeitaufwand,
- erfordert das Abschalten des laufenden Extruders, um den Druck zu entlasten,
- erfordert viel Geschick und handwerkliches Können vom Bediener zum Entnehmen des verschmutzten Siebes und zum Einlegen des neuen Siebes mit ständiger Gefahr sich zu verbrennen,
- erfordert Wartezeiten, um das neue Sieb auf Temperatur zu bringen,
- gefährdet den Bediener, da er aus dem geöffneten Düsenflansch das heiße Sieb entnehmen, die Flächen reinigen und ein neues Sieb einlegen muß,
- bietet wegen der vielen von Hand auszuführenden Tätigkeiten viele Fehlermöglichkeiten, die das Ergebnis beeinflussen können.

Aufgabe der vorstehenden Erfindung war es die bestehenden Nachteile zu überwinden. Diese Aufgabe wird erfindungsgemäß gelöst durch Kombination eines Zweiwegeschmelzeventils für 2 Stellungen - nämlich einer Arbeitsstellung für den Prüfvorgang und einer Reinigungsstellung - mit einem neuartigen Siebwechselsystem, welches mindestens 2 Siebstellungen im Inneren der beheizten Prüfvorrichtung hat, nämlich eine Vorwärmeposition und eine Prüfposition, und zusätzlich dazu je eine Einlege und eine Entnahmeposition.

Weiterhin ist dieses Siebwechselsystem dadurch gekennzeichnet, daß die einzelnen Siebe hintereinander, reihenförmig angeordnet werden und in ihrer Gesamtheit den Schiebeschlitten bilden, welcher durch verschieben des zuletzt eingelegten neuen Siebes alle weiteren 3 davor liegenden Siebe verschiebt. Die Vorschubbewegung kann bewirkt werden z. B. durch einen seitlich von der Führung angeordneten Schwenkhebel mit einem Druckstift gegen das letzte Sieb. Nach dem Stand der Technik werden die Siebe immer in einen gesonderten Schlitten oder Schwenkplatte oder Drehkranz eingelegt. Ein solches Bauteil entfällt hier.

Nach einer weiteren vorteilhaften Ausgestaltung der Erfindung kann das in Prüfposition befindliche Sieb zusätzlich in senkrechte Richtung zur Vorschubrichtung verschoben werden, zum Anpressen an die schmelzezuführende Öffnung und somit zur Abdichtung des Siebumfanges gegen das Gehäuse und damit zum Verhindern eines Austretens der Schmelze.

In vorliegendem Fall wird der in Abflussrichtung der Schmelze gelegene konische Düsenteil mit einem Außengewinde versehen und über einen Schwenkhebel so verdreht, daß dieser Düsenteil nun das Sieb anhebt und gegen das darüber liegende Gehäuse preßt.

Vorteilhaft wird die Prüfvorrichtung so angeordnet, daß die Siebe in das Gehäuse flach liegend eingelegt werden. Dies erleichtert das Einlegen, weil die auf der Lochplatte liegenden Siebronde und ein evtl. noch darauf liegender Dichtring somit gut in Position bleiben, wogegen bei senkrechter Anordnung immer die Gefahr des Herausfallens besteht. Weiter wird durch die so herbeigeführte senkrecht nach unten ablaufende Schmelze eine höhere Sicherheit für den Bediener bewirkt; so führt durch Lufteinschlüsse verursachtes Herausspritzen von Schmelze nicht zu einer Gefährdung.

Die erfindungsgemäße Vorrichtung kann nun wahlweise direkt durch einen Einschneckenextruder mit Schmelze beschickt werden oder es kann einem Einschneckenextruder eine Zahnrad-Schmelzepumpe nachgeschaltet werden, welche wiederum die Vorrichtung mit einem gleichbleibenden Schmelzestrom beschickt.

Die erfindungsgemäße Vorrichtung ist mit Mitteln zum genauen Temperieren versehen seien es z. B. Heizpatronen oder Heizmanschetten sowie mit dazugehörenden Temperaturfühlern und extern aufgebauten Regelgeräten.

Eine weitere Ausgestaltung der Erfindung sieht vor, daß alle 3 Bewegungen, welche an der Vorrichtung ausgeführt werden, nämlich:

- das Schwenken des Schmelzeventils,
- das Anpressen des Siebes gegen das Gehäuse,
- das Weiterschieben der Siebe nicht von Hand durch Schwenkhebel, sondern wahlweise durch pneumatische, hydraulische oder durch elektromotorisch betriebene Vorrichtungen, betätigt werden können.

Eine derartige, nach den Maßnahmen der Erfindung aufgebaute Prüfvorrichtung weist folgende Vorteile auf:

- der Zeitaufwand für den Wechsel eines Siebes wird extrem verkürzt,
- eine Abschaltung des Extruders mit Schmelzepumpe ist nicht notwendig,
- die Vorwärmung des neuen Siebes ist ein integrierter Bestandteil,
- das Abdichten erfolgt sicher,

- das Entnehmen des alten Siebes und das Einlegen des neuen Siebes ist sehr einfach,
- die Betriebssicherheit ist erheblich erhöht.

Die Vorteile und Merkmale der Erfindung ergeben sich auch aus der nachfolgenden Beschreibung eines Ausführungsbeispieles in Verbindung mit den Zeichnungen und den Ansprüchen.

Es zeigen:

Fig. 1     einen Längsschnitt durch Extruder, Schmelzepumpe und Vorrichtung zum Druckfiltertest;

Fig. 2     einen Längsschnitt durch die Vorrichtung mit geschwenktem Schmelzeventil;

Fig 3     einen Querschnitt durch die Vorrichtung;

Fig. 4     einen Teilausschnitt;

Fig. 5     eine perspektivische Ansicht der erfinderischen Vorrichtung.

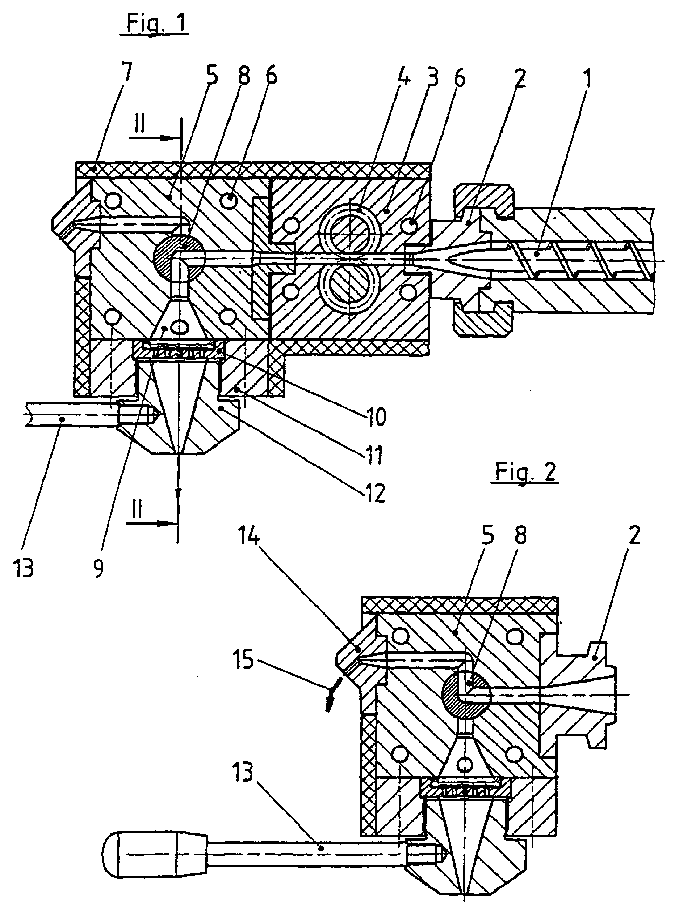

In Fig. 1 plastifiziert die Schnecke 1 des Einschneckenextruders den Kunststoff und fördert diesen weiter. Über die Kupplung 2 ist der Extruder mit der Schmelzepumpe 3 verbunden. Das Zahnradpaar 4 der Schmelzepumpe fördert die Schmelze mit gleichbleibender Geschwindigkeit in die Prüfvorrichtung 5. Heizpatronen 6 beheizen sowohl Schmelzepumpe wie auch die Prüfvorrichtung, Isolierplatten 7 begrenzen den Wärmeverlust. Das Schmelzeventil 8 ist um die Mittelachse schwenkbar. In der Zeichnung ist der Schmelzekanal nach unten umgelenkt, so daß die Schmelze nun in den konisch sich erweiternden Druckraum 9 fließt. Das Sieb 10 ist im Unterteil 11 der Prüfvorrichtung eingebaut. Es wird durch das mit einem Gewinde versehene konische Düsenteil 12, an den oberen Teil der Prüfvorrichtung 5 gepreßt. Zum Durchführen dieser Drehbewegung wird der Griff 13 gedreht. Mit dem Anpressen des Siebes wird die gute Abdichtung erreicht, welche verhindert, daß auch bei hohen Drücken - welche auftreten, wenn bei schmutzigen Schmelzen das Sieb sich stark zusetzt - keine Schmelze seitlich austritt und damit die Messergebnisse verfälscht.

Fig. 2 zeigt den gleichen Schnitt wie in Fig. 1 mit zwei Änderungen. Die Prüfvorrichtung 5 ist direkt mit einem Flansch 2 versehen zur direkten Koppelung an einen Extruder. In diesem Falle wird also auf eine Schmelzepumpe verzichtet.

Die zweite Änderung betrifft das Schmelzeventil 8. Dieses ist jetzt um 90° gegen Uhrzeigerrichtung gedreht, somit führt der Schmelzekanal hoch und führt über die Austrittsdüse 14 das Material 15 drucklos ins Freie. Diese Position wird gewählt beim Beginn des Siebwechselvorganges zum Druckentlasten der Siebe.

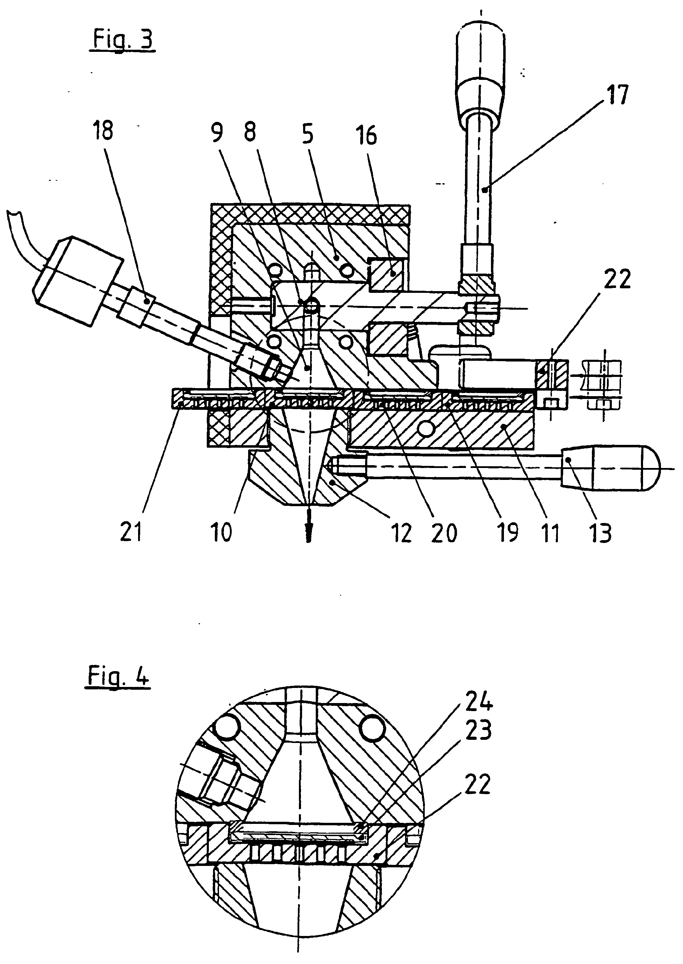

Fig. 3 zeigt einen Querschnitt durch die Prüfvorrichtung in der Ebene II - II der Fig. 1. Das Schmelzeventil 8 ist in einem vorderen Lagerstein 16 abgestützt und wird durch den Hebel 17 von den Positionen Prüfen (wie in Fig. 1 dargestellt) in die Position Siebwechseln (wie in Fig. 2 dargestellt) geschwenkt. Der in dem Druckraum 9 von dem Sieb sich aufbauende Massedruck wird durch den Massedruckaufnehmer 18 sowie einer dazugehörenden Verstärker- und Anzeigeeinheit gemessen und registriert. Im nutenförmig ausgearbeiteten Unterteil 11 der Prüfvorrichtung liegen die bis zu 4 Siebe bzw. werden darin verschoben, und zwar Sieb 19 liegt in der Einlegeposition, Sieb 20 in der Vorwärmeposition, Sieb 10 ist in der Arbeitsposition (angepreßt durch das konische Düsenteil 12) und Sieb 21 liegt in der Entnahmeposition. Das Verschieben der vier Siebe erfolgt gleichzeitig durch den Druckstift 22, welcher an einem Schieber oder Schwenkarm befestigt sein kann.

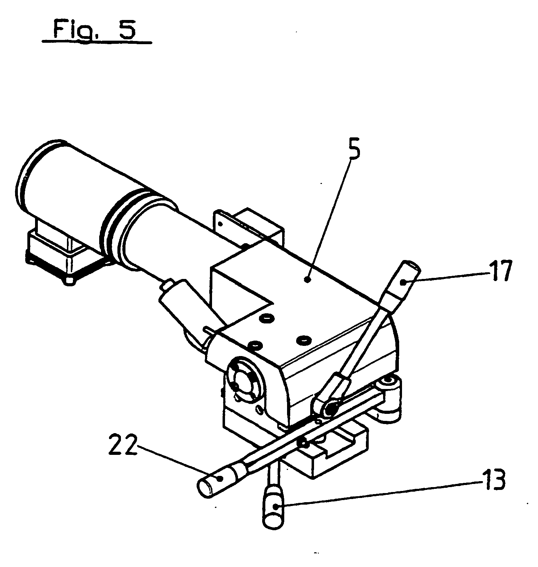

Fig. 4 ist ein vergrößerter Ausschnitt aus Fig. 3 und zeigt den Aufbau des Siebes 10. Es besteht aus der aus Stahl gefertigten Lochplatte 22, einer eingelegten Siebronde 23 aus mehreren Sieben unterschiedlicher Maschenzahl, oft mit einer Metalleinfassung versehen und einem weiteren schmalen Dichtring 24.

Fig. 5 zeigt eine Ansicht der beschriebenen Vorrichtung, woran die Stellung der drei beim Siebwechsel verwendeten Hebel zu erkennen sind. Das Gerät ist in Arbeitsposition dargestellt, also Hebel 17 zum Verstellen des Schmelzeventils ist in rechter Position, der Schwenkhebel 13 zum Anziehen des konischen Düsenteils 10 ist in rechter Position, der Hebel 22 zum Einschieben der Siebe ist eingedrückt.

Um einen Siebwechsel durchzuführen wird wie folgt verfahren: die Schmelzeweiche 8 wird von der Prüfposition in die Reinigungsposition geschwenkt (siehe Fig. 2). Da dies schnell geschieht, kann der Antrieb von Extruder und Schmelzepumpe aktiv bleiben. Nun wird durch Verdrehen des Griffes 13 das konische Düsenteil 12 abgesenkt. Der Massedruck in der Druckkammer 9 wird abgebaut und das Sieb 10 ist frei. Nun kann mit nur geringer Kraft durch Andrücken des Hebels 22 die Gruppe der vier Siebe um je eine Position weitergeschoben werden. Das bisher vorgewärmte Sieb 20 käme jetzt in die Prüfposition. Durch Schließen des konischen Düsenteils 12 mittels des Griffes 13 wird das Sieb 20 fest eingespannt.

Danach kann sofort das Schmelzeventil 8 von der Siebwechselstellung in die Arbeitsstellung geschwenkt werden. Damit fließt die Schmelze erneut in den Druckraum und ein neuer Prüfvorgang kann beginnen. Das gebrauchte Sieb kann auf der Rückseite entnommen werden zum Reinigen. Ein neues Sieb wird vorne in die Nut eingelegt.

Der gesamte Vorgang eines Siebwechsels dauert ca. 10 sec. und ist von einer angelernten Kraft auszuführen. Damit ist eine ganz wesentliche Verbesserung gegenüber dem Stand der Technik erreicht.

**Patentansprüche**

1. Vorrichtung zum Prüfen der Reinheit einer Kunststoffschmelze durch Plastifizieren der Schmelze z. B, in einem Extruder und durch Hindurchpressen einer definierten Menge dieser Schmelze durch ein Sieb definierter Größe und Maschenweite bei gleichzeitiger Messung des Schmelzedruckes, welcher sich vor dem Sieb aufbaut, **gekennzeichnet durch** die Kombination eines Zweiwegeschmelzeventils (8) für 2 Stellungen -nämlich einer Arbeitsstellung für den Prüfvorgang und einer Reinigungsstellung - mit einem neuartigen Siebwechselssystem, welches mindestens 2 Siebstellungen im Innern der beheizten Prüfvorrichtung hat, nämlich eine Vorwärme- (20) und eine Prüfposition (10) und zusätzlich dazu je eine Einlege- (19) und eine Entnahmeposition (21).

2. Vorrichtung nach Anspruch 1, **dadurch gekennzeichnet,** **daß** die vier Siebe (19, 10, 20, 21), welche reihenförmig hintereinander angeordnet sind und in ihrer Gesamteinheit den Schiebeschlitten bilden, in den mit einer Nut versehenen Unterteil (11) der Prüfvorrichtung geführt werden und durch Verschieben des zuletzt eingelegten Siebes alle insgesamt verschoben werden.

3. Vorrichtung nach Anspruch 1 und 2, **dadurch gekennzeichnet,** **daß** die Verschiebung mechanisch erfolgt, bzw. über einen schwenkbaren Hebel oder einen Schieber.

4. Vorrichtung nach einem der Ansprüche 1 bis 3, **dadurch gekennzeichnet,** **daß** dasjenige Sieb (10), welches sich in der Prüfposition befindet, in zur Vorschubrichtung senkrechter Richtung gegen die Prüfvorrichtung (5) zur Abdichtung des Druckraumes (9) gegen Schmelzeaustritt verschoben und verspannt wird, beispielsweise durch Verdrehen des mit einem Gewinde versehenen konischen Düsenteils (12) unter Zuhilfenahme des Griffes (13).

5. Vorrichtung nach den Ansprüchen 1 bis 4, **dadurch gekennzeichnet,** **daß** die Prüfvorrichtung so angeordnet wird, daß die Siebe (19, 10, 20, 21) in die Nut des vorstehenden Unterteils (11) der Vorrichtung flach liegend einlegbar sind.

6. Vorrichtung nach den Ansprüchen 1 bis 5, **dadurch gekennzeichnet,** **daß** die Beschickung der Vorrichtung durch einen Extruder (1) mit nachgeschalteter Schmelzepumpe (3) erfolgt, um eine genauere Fördermenge zu garantieren.

7. Vorrichtung nach den Ansprüchen 1 bis 6, **dadurch gekennzeichnet,** **daß** die drei Bewegungen, welche in der Vorrichtung erfolgen, nämlich

   - das Schwenken des Schmelzeventils,
   - das Anpressen des Siebes gegen das Gehäuse der Prüfvorrichtung,
   - das Weiterverschieben der Siebe (19, 10, 20, 21) beim Siebwechsel nicht von Hand sondern durch pneumatische, hydraulische oder elektromechanisch betriebene Vorrichtungen ausgeführt werden.

8. Vorrichtung nach den Ansprüchen 1 bis 7, **dadurch gekennzeichnet,** **daß** die erfindungsgemäße Vorrichtung, nämlich die Prüfvorrichtung (5), sowie das Unterteil (11) mit Mitteln zum genauen Temperieren derselben versehen sind, z. B. mit Heizpatronen (6) oder Heizmanschetten sowie mit dazugehörenden Temperaturfühlern und extern aufgebauten Regelgeräten.

**Claims**

1. An apparatus for testing the purity of a plastic melt by plasticizing the melt e.g. in an extruder and forcing a defined amount of this melt through a screen of defined size and mesh width while simultaneously determining the melt pressure materializing upstream of the screen, **characterized by** the combination of a changeover melt valve (8) for two positions - namely a working position for testing and a cleaning position - and a novel screen changer system, which has at least two screen positions in the interior of the heated tester, namely a pre-heating (20) and a testing (10) position, in addition to respective insertion (19) and removal (21) positions.

2. The apparatus as set forth in claim 1, **characterized in that** the four screens (19, 10, 20, 21) are arranged in series, forming in their entirety a slide carriage are guided by a lower part (11) of said tester provided with a recess and advanced all together by advancing the last inserted screen.

3. The apparatus as set forth in claim 1 and 2, **characterized in that** advancing is done by mechanical means, respectively via a pivot lever or pusher.

4. The apparatus as set forth in any of the claims 1 to 3, **characterized in that** the screen (10) disposed in the test position is advanced and clamped in a direction perpendicular to the advance direction against the tester (5) to screen the pressure space (9) against drooling of the melt, for example, by rotating the threaded conical nozzle part (12) with the aid of the handle (13).

5. The apparatus as set forth in any of the claims 1 to 4, **characterized in that** the tester is arranged so that the screens (19, 10, 20, 21) are insertable flat into the recess in the projecting lower part (11) of the apparatus.

6. The apparatus as set forth in any of the claims 1 to 5, **characterized in that** feeding the apparatus is done by an extruder (1) with a downstream melt-pump (3) to guarantee a more precise flow.

7. The apparatus as set forth in any of the claims 1 to 6, **characterized in that** the three movements made in the apparatus, namely

   - pivoting the melt valve,
   - pressing the screen against the housing of the tester,
   - advancement of the screens (19, 10, 20, 21) during screen changing is not actuated manually, but by pneumatic, hydraulic or electro mechanical devices.

8. The apparatus as set forth in any of the claims 1 to 7, **characterized in that** the apparatus in accordance with the invention, namely the tester (5) as well as the lower part (11) includes means for accurately controlling the temperature, e.g. by heating cartridges (6) or heating sleeves as well as with temperature sensors and external controllers.

**Revendications**

1. Dispositif pour tester la pureté d'une matière fondue plastique par plastification de la matière fondue par exemple dans une extrudeuse et en forçant un montant défini de cette matière fondue à travers un crible de taille et largeur de maille définies et simultanément déterminant la pression de la matière fondue se formant an amont du crible **caractérisé par** la combinaison d'une vanne de fusion à deux voies (8) pour deux positions - nommément une position de travail pour tester et une position de nettoyage - et un nouveau système de changement de crible, qui a au moins deux positions de crible dans l'intérieur du testeur chauffé, nommément une position de préchauffage (20) et de testage (10), en addition aux positions relatives d'insertion (19) et d'enlèvement (21).

2. Le dispositif selon la revendication 1 **caractérisé en ce que** les quatre cribles (19, 10,20,21) disposés en série, formant dans leur intégralité un chariot coulissant sont guidés par une partie basse (11) dudit testeur fourni avec une encoche et avancent tous ensemble par avancement du dernier crible inséré.

3. Le dispositif selon la revendication 1 et 2 **caractérisé en ce que** cet avancement est fait par des moyens mécaniques, respectivement via un levier pivot ou une pousseuse.

4. Le dispositif selon l'une des revendications 1 à 3, **caractérisé en ce que** le crible (10) placé dans la position de test est avancé et haubané dans une direction perpendiculaire à la direction d'avancement contre le testeur (5) pour colmater l'espace de pression (9) contre la fuite de la matière fondue, par exemple, par rotation de la partie de buse conique filetée (12) avec l'aide d'une poignée (13).

5. Le dispositif selon l'une des revendications 1 à 4, **caractérisé en ce que** le testeur est disposé de sorte que les cribles (19,10,20,21) soient insérables de manière plate dans l'encoche dans la partie basse saillante (11) du dispositif.

6. Le dispositif selon l'une des revendications 1 à 5, **caractérisé en ce que** l'alimentation du dispositif est faite par une extrudeuse (1) avec une pompe d'alimentation de la matière fondue en aval (3) pour garantir un flux plus précis.

7. Le dispositif selon l'une des revendications 1 à 6, **caractérisé en ce que** les trois mouvements fait dans le dispositif, nommément,

   - pivotage de la vanne de fusion
   - pression du crible contre le logement du testeur
   - avancement des cribles (19,10,20,21) pendant le changement de cribles ne sont pas réalisés manuellement mais par des dispositifs pneumatiques, hydrauliques ou électromécaniques.

8. Le dispositif selon l'une des revendications 1 à 7, **caractérisé en ce que** le dispositif en accord avec l'invention, nommément le testeur (5), comme la partie basse (11) inclut des moyens pour contrôler précisément la température par exemple par des cartouches de chauffage (6) ou des manchons de chauffage comme avec des capteurs de température et des appareils de réglage externes.

EP 1 441 894 B1

Fig. 1

Fig. 2

7

Fig. 3

Fig. 4

## Fig. 5